# EUROPEAN PATENT APPLICATION

(11) **EP 0 645 080 A1**
(43) Date of publication of application: **29.03.1995**
(21) Application number: 94114585.6
(22) Date of filing: 16.09.1994
(51) Int. Cl.: A01K 63/04, A01K 63/00

(54) **Device to oxigenate fish breeding plants**

(30) Priority: 24.09.1993 IT UD930192
(71) Applicant: Battigelli, Giuseppe, I-33072 Casarsa della Delizia (PN) (IT); Battigelli, Lucilla, I-33072 Casarsa della Delizia (PN) (IT)
(72) Inventor: Battigelli, Giuseppe, I-33072 Casarsa della Delizia (IT)
(74) Representative: Petraz, Gilberto Luigi

(57) **Abstract**

Device to oxygenate fish breeding plants, and relative system to manage and control a fish breeding plant, in cooperation with fish breeding tanks and within those tanks, the device (10) being positioned substantially vertically and comprising a first upper chamber (23a) and a second lower chamber (23b), the first upper and second lower chambers (23a-23b) being separated by partition baffle means (24-26) defining an acceleration slit (25), the first upper chamber (23a) having at its upper upstream end an adjustable weir (18) and in its upper downstream portion a shut-off wall (15), the second lower chamber (23b) having in its lower upstream portion a closure wall (14a) and in its lower downstream portion at least one transit gap (22), delivery means (28) to diffuse oxygen being included in the lower portion of the second lower chamber (23b).

## Description

This invention concerns a device to oxygenate fish breeding plants, as set forth in the main claim.

The oxygenation device according to the invention is employed in the tanks of fish breeding plants and, in particular, for the breeding of trout so as to ensure at all times a sufficient content of uniformly diffused oxygen in the water within the tanks.

The state of the art discloses fish breeding plants comprising a plurality of substantially rectangular tanks placed side by side, into which water is run. The water is generally taken from a stream or spring and runs by gravity from one tank to the next one before being discharged thereafter into the stream downstream.

The change-over of water has to be continuous so as to ensure that its oxygen content is greater than a minimum limit value, which is about 6% and is needed to ensure the survival and proper growth of the fish.

When there is a lack of water due, for instance, to the dry season or to exhaustion of the spring, the changing of the water is no longer ensured and the oxygen content of the water in the tanks falls below the pre-set minimum value.

For this reason attempts have been made to increase the oxygen content of the water by direct injection of oxygen into the tanks.

This system of direct injection of oxygen has been employed successfully in the lorries which convey live fish but does not achieve the desired purpose in breeding tanks.

In fact, seeing that the breeding tanks are of great sizes with a width of about 10 metres, a length of 200 metres or more and a depth of water of 1.2 to 1.5 metres, the oxygen cannot be diluted and distributed evenly.

Trials have also been made with surface delivery means and aerators, but the outcome has been very disappointing.

In fact, the traditional oxygen injection systems entail the problem that the oxygen injected does not become diluted enough in the water and does not become evenly distributed over the whole tank.

It has been found that the oxygen content is greater than the required minimum only in the neighbourhood of the oxygen injection chamber and that the content drops quickly below the threshold value to be ensured as soon as the water departs from the injection chamber.

The oxygenation methods of the state of the art therefore do not enable the required minimum oxygen content to be ensured where fresh water is limited and, above all,where the breeding plant works with a closed circuit with continuous re-circulation of the same water and the addition of a minimum quantity of topping-up water.

The present applicants have designed, tested and embodied this invention so as to overcome the drawbacks of the state of the art and to achieve further advantages.

This invention is set forth and characterised in the main claims, while the dependent claims describe variants of the idea of the main embodiment.

The invention enables a substantially homogeneous distribution of the oxygen content to be ensured within the tanks of a fish breeding plant.

The device according to the invention makes possible the provision of a fish breeding plant, even with a closed cycle, in such a way that it is possible that the same water, apart from a modest quantity of topping-up water, can be re-circulated in the tanks by suitable pumps.

The device according to the invention enables the correct oxygen content to be always adjusted and ensured in the water in each single tank in a simple manner at a low cost.

The device according to the invention creates a transverse barrier within each tank; this barrier consists advantageously of a plurality of aligned modules connected together removably and closing the tank transversely.

Where the tanks are especially long, a plurality of barriers suitably spaced apart can be fitted within one and the same tank.

The modules can be removed individually so as to assist the handling, cleaning and installation of the barrier.

Each module includes a first upper calm chamber and a second lower oxygenation chamber. The two chambers are separated by acceleration and mixing means with an adjustable movable partition baffle which define an acceleration slit.

The upper calm chamber is open at its upper upstream side so as to receive the arriving water and includes an adjustable weir to regulate the quantity of water arriving.

The lower oxygenation chamber is closed at its upper upstream side and is open in its lower downstream portion; it contains along its length oxygen diffusion means.

These oxygen diffusion means are associated with flow regulation means and possibly also with pressure regulation means.

The oxygen diffusion means are positioned in the lower portion of the lower oxygenation chamber. By means of this lay-out the oxygen, which is already in the form of tiny bubbles or microbubbles and is not diffused at once in the water, rises against the current and is attacked by a mechanical action of compression and diffusion.

If the oxygen rises to the acceleration and mixing means with their movable partition baffle, the Venturi effect of the accelerated water or the turbulence created thereby at the sides enhances the diffusion of the oxygen in the water.

In the oxygen diffusion means the oxygen arrives at a low pressure of about 0.8-2 bar but advantageously 1 to 1.3 bar.

It should be noted that the present applicants have found that the lower the pressure of injection is, the better the diffusion of oxygen in the water is.

The water, when passing from the upper calm chamber to the lower oxygenation chamber, increases its speed when running through the slit with its small section and turbulences are generated which assist the intimate mixing of the water with the oxygen rising in the opposite direction.

This mixing helps diffusion of the oxygen microbubbles in the water, and the partition baffle means prevent the oxygen rising towards the open surface of the water.

The device according to the invention ensures that the water leaving the lower oxygenation chamber through the transit gap has the required oxygen content and that this oxygen content, being diffused in the form of microbubbles, is kept above the minimum required threshold value even at the parts of the tanks far from the barrier.

The parameters available to the plant operator in optimising and making even the distribution and diffusion of the oxygen in the water are the pressure and rate of flow of the injected oxygen, the height of the inlet weir for entry of water into the upper calm chamber and the width of the acceleration slit which separates the upper calm chamber from the lower oxygenation chamber.

The device according to the invention can be associated with means that detect the oxygen content of the water, these detector means being located upstream and downstream of the barrier so as to check the correct oxygen content of the water.

According to a variant the oxygenation device according to the invention is governed by a managing, control and programming unit which, in accordance with the data coming from the oxygen content detectors installed upstream and downstream of the barrier, adjusts the height of the inlet weir and the width of the acceleration slit between the two chambers and also the pressure and rate of flow of the oxygen injected.

According to another variant a means to measure the temperature of the water is included and is connected to the managing, control and programming unit.

According to yet another variant a means to measure the level of the water in the tank is included and sends signals to the managing, control and programming unit so as to actuate the means which tops up the water in the tank.

According to still another variant automatic dispensers of food for the fish are included and are governed by the managing, control and programming unit in delivering the required quantity of food per fish at pre-set intervals of time.

The device according to the invention therefore enables all the functions of the fish breeding plant to be performed automatically and always ensures excellent conditions of the water with a very modest consumption of topping-up water and oxygen.

The attached figures are given as a non-restrictive example and show some preferred embodiments of the invention as follows:-
- Fig.1: is a plan view of a fish breeding plant to which the device according to the invention is fitted;
- Fig.2: is a three-dimensional view of a partly cutaway barrier according to the invention;
- Fig.3: shows in an enlarged scale a cross-section of the barrier according to the invention along the line A-A of Fig.1;
- Figs.4a and 4b: show two possible forms of embodiment of the oxygen diffusion means;
- Fig.5: is a diagrammatic plan view of an automatic oxygenation device according to the invention as fitted to a fish breeding plant.

The reference number 10 in the attached figures denotes generally a water oxygenation device for fish breeding plants according to the invention.

The oxygenation device 10 according to the invention is fitted in tanks 11 of a fish breeding plant and consists of a substantially vertical barrier 12 which is installed transversely in the tank 11 and advantageously at a right angle to the lengthwise axis of the same 11 and to the direction of flow of the water.

The barrier 12 is formed advantageously by a plurality of modules 13 assembled removably together so as to facilitate handling, installation and dismantling operations and cleaning duties.

The barrier 12 is fitted with a seal engagement to the lateral edges of the tank 11.

The barrier 12 consists of two sidewalls, namely an upstream sidewall 14a and a downstream sidewall 14b, which are parallel and suitably spaced apart to define an intermediate chamber 23.

In the description that follows, the words "upstream" and "downstream" are to be understood as referring to the direction of flow of the water in the tank 11.

The upstream sidewall 14a is fitted with a seal engagement between its lower edge 16 and the bottom 17 of the tank 11 and comprises an auxiliary sidewall 18 able to slide vertically and cooperating with the upper part 19 of the upstream sidewall 14a and protruding thereabove.

This auxiliary sidewall 18 acts as a weir for the water which pours into the intermediate chamber 23.

The auxiliary sidewall 18 can be adjusted as regards its height and in this example is moved by a first actuator 20.

The downstream sidewall 14b is fitted with its lower edge 21 raised from the bottom 17 of the tank 11 by a desired pre-set distance so as to provide a transit gap 22 through which the water leaving the intermediate chamber 23 can pass.

The downstream sidewall 14b extends above the level of the water so as to form a shut-off sidewall 15, which prevents the water that falls into the intermediate chamber 23 from passing over into the downstream portion of the tank 11.

The intermediate chamber 23 is divided into two chambers, one superimposed on the other, namely an upper calm chamber 23a and a lower oxygenation chamber 23b, by partition baffle means 24 installed transversely on the sidewalls 14.

These partition baffle means 24 define an acceleration slit 25 of a small width, in which the water is accelerated during its progress from the upper calm chamber 23a to the lower oxygenation chamber 23b.

The width of the acceleration slit 25 can be adjusted advantageously to alter the speed of passage of the water and to generate the required degree of turbulence.

In this case the adjustment of the width of the acceleration slit 25 is carried out by an auxiliary baffle 26 that extends along the whole length of the partition baffle means 24 and can move perpendicularly thereto. In this example the auxiliary baffle 26 is operated by a second actuator 27.

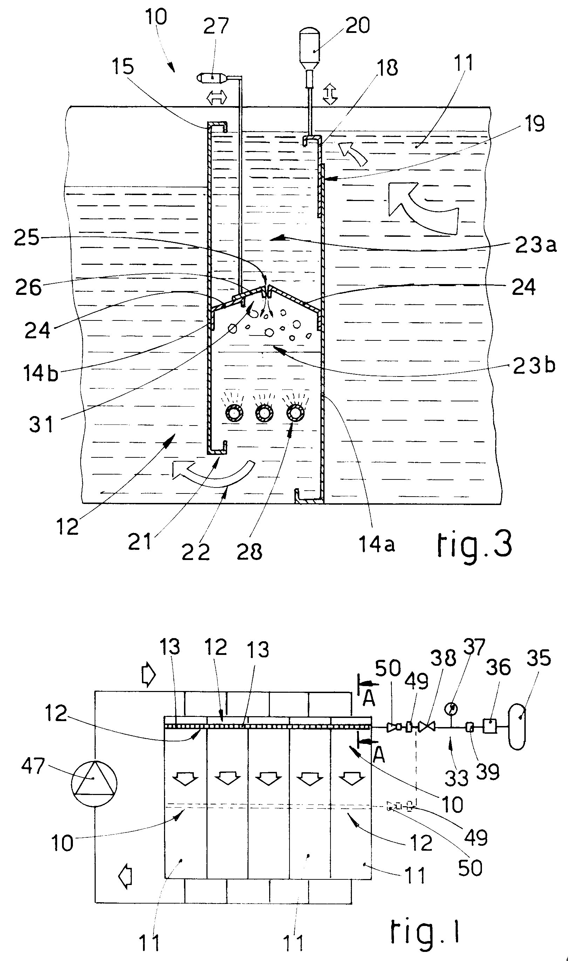

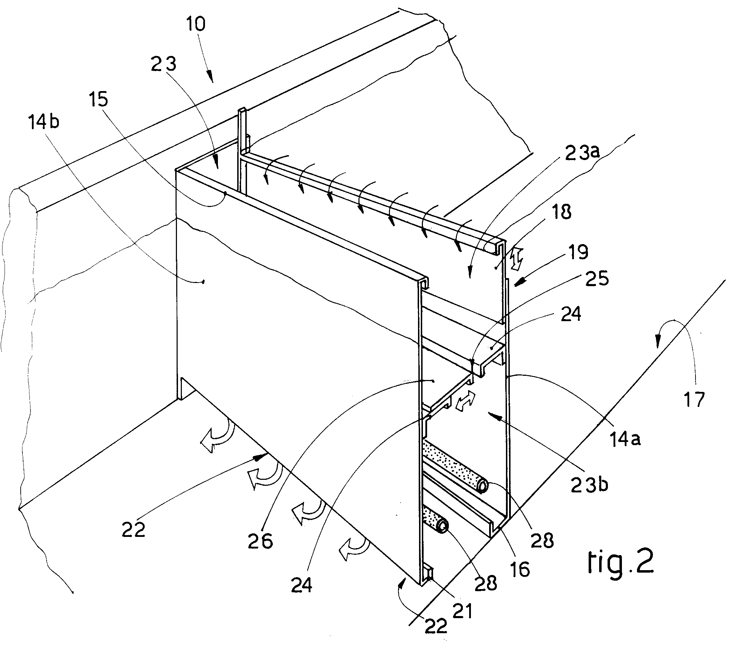

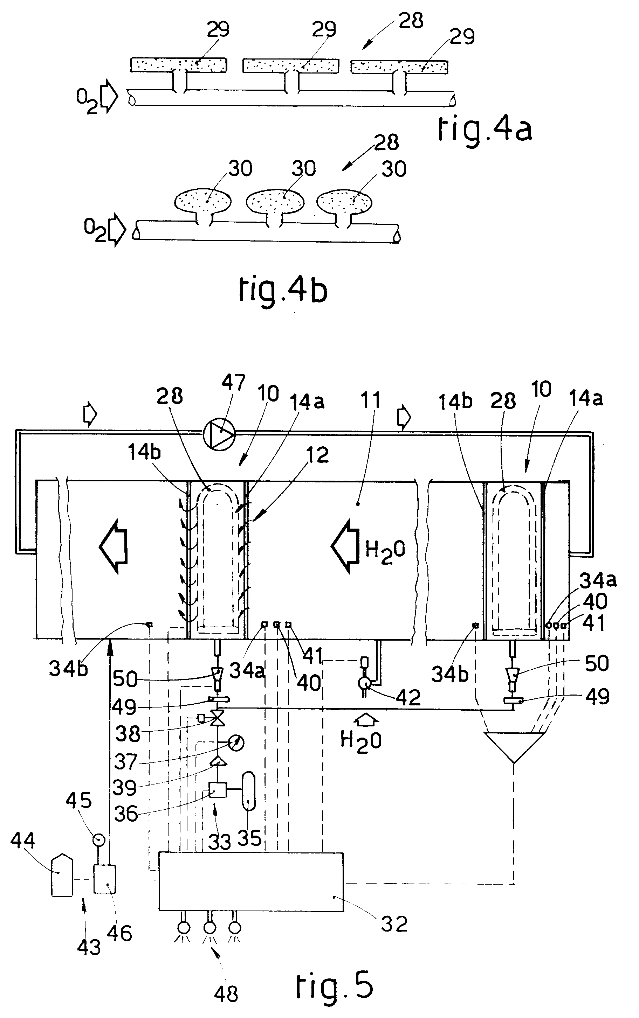

Oxygen delivery means 28 are included in the lower oxygenation chamber 23b and inject oxygen at a low pressure. The oxygen delivery means 28 of Figs.2 and 3 consist of pipes 28 containing microholes from which microbubbles of oxygen emerge.

According to the variants of Figs.4a and 4b the oxygen delivery means 28 include a plurality of diffuser elements 29 or mushroom heads 30 containing microholes and associated with an oxygen distribution pipe so as to diffuse microbubbles of oxygen as uniformly as possible.

The pressure at which the oxygen is injected is between 0.8 and 2 bar, but advantageously between 1 and 1.3 bar, depending on the size of the intermediate chamber 23 and the number of oxygen delivery means 28.

It has been found that with the oxygenation device 10 according to the invention the results achieved are best when the oxygen injection pressure is low.

According to the variant of Fig.3 the partition baffle means 24 are fitted inclined at an angle to the horizontal so as to define an upwardly pointed space 31, in which there collects any oxygen which is freed and which is re-mixed with the water discharged through the acceleration slit 25.

In fact, the Venturi effect generated by acceleration of the water passing within the acceleration slit 25 and the turbulence created at the sides of the acceleration slit 25 assist and enhance the diffusion of oxygen in the water.

In the device according to the invention the water, after having passed through the upper calm chamber 23a, passes through the acceleration slit 25, in which it is accelerated so as to create a turbulent motion that improves the conditions of absorption of the diffused oxygen in the lower oxygenation chamber 23b.

We give below as a mere example the data for an oxygenation device 10 according to the invention in association with a fish breeding plant consisting of a plurality of tanks 11 positioned side by side:
- length of each tank 11 - 200 metres;
- width of each tank 11 - 10 metres;
- depth of the water upstream of the barrier 12 - 1.5 metres;
- depth of the water downstream of the barrier 12 - 1.2 metres;
- width of the intermediate chamber 23 - 20-30 cms.;
- height of the transit gap 22 - 6-8 cms.;
- width of the acceleration slit 25 - 0.8-1.5 cms.:
- overall volume of the water in the breeding plant - 32,000 m³
- quantity of fish held in the breeding plant - 300,000 kgs.;
- daily consumption of oxygen - 2000 lts.;
- rate of flow of fresh or re-circulated water - 1600 lts/second.

With the oxygenation device 10 according to the invention it is found that the consumption of oxygen and topping-up water is very limited whilst ensuring at all times in the water an oxygen content greater than the minimum value laid down of about 6%.

Fig.5 shows a tank 11 in which the water is re-circulated by a pump 47 and in which are included a first oxygenation device 10 according to the invention fitted at the upstream end of the tank 11 and a second oxygenation device 10 according to the invention fitted at an intermediate part of the tank 11.

These oxygenation devices 10 according to the invention are equipped with a plurality of auxiliary means which make their working fully automatic.

In this example a managing, control and programming unit 32 is associated with the oxygenation devices 10 according to the invention and regulates the working of equipment 33 feeding oxygen to the oxygen delivery means 28 sunk in the lower oxygenation chamber 23b in the tank 11.

In this case the oxygen feeding equipment 33 comprises a storage tank 35 to hold oxygen under pressure, a pressure reducing unit 36, a pressure gauge 37, a shut-off valve 38 and a flow regulator unit 39.

In the plant of Fig.5 the oxygen delivery and diffusion means 28 in the lower oxygenation chamber 23b of each oxygenation device 10 fitted in the various tanks 11 have their own control and pressure regulation unit 49 and their own flow regulation unit 50.

It is possible in this way to adjust the delivery of oxygen into each single tank 11 according to the characteristics of the water in each tank 11 and possibly to halt the delivery of oxygen into tanks 11 where the oxygen content is higher than the required minimum value.

Such adjustment takes place according to signals sent to the managing, control and programming unit 32 by oxygen measurement means 34 fitted upstream 34a and downstream 34b respectively of the barrier 12.

As we said above, so as to avoid waste of oxygen where the oxygen concentration measured in the tanks 11 upstream of the barrier 12 is greater than the desired value, the managing, control and programming unit 32 shuts the shut-off valve 38 fitted to the oxygen feeding equipment 33.

In this case a thermometer 40 to measure the temperature of the water in the tanks 11 is included.

The managing, control and programming unit 32 is also associated with a means 41 to measure the level of the water; the signal sent by this measurement means 41 is used by the managing, control and programming unit 32 to actuate the shut-off means 42 which regulate the quantity of topping-up water to be delivered into the tank 11.

According to a variant, the managing, control and programming unit 32 governs also regulation means which in this case consist of actuators 20 and 27 and which adjust the height of the auxiliary sidewall 18 and the auxiliary baffle 26 that control the hydraulic conditions of the tank 11.

According to yet another variant the managing, control and programming unit 32 governs also a food dispensing plant 43, which in this case comprises a feedstuffs storage silo 44, with which is associated a dispensing means 46 equipped advantageously with a timer 45 to programme the feeding periods.

According to still another variant the managing, control and programming unit 32 is equipped with a plurality of alarms 48 of an acoustic and/or visual type, which give warnings of anomalies or malfunctioning in the plant.

## Claims

1. Device to oxygenate fish breeding plants (11), in cooperation with fish breeding tanks (11) and within those tanks (11), the device (10) being characterised in that it is positioned substantially vertically and comprises a first upper chamber (23a) and a second lower chamber (23b), the first upper and second lower chambers (23a-23b) being separated by partition baffle means (24-26) defining an acceleration slit (25), the first upper chamber (23a) having at its upper upstream end an adjustable weir (18) and in its upper downstream portion a shut-off wall (15), the second lower chamber (23b) having in its lower upstream portion a closure wall (14a) and in its lower downstream portion at least one transit gap (22), delivery means (28) to diffuse oxygen being included in the lower portion of the second lower chamber (23b).

2. Oxygenation device (10) as in Claim 1, in which the partition baffle means (24) include a movable adjustable baffle (26).

3. Oxygenation device (10) as in Claim 1 or 2, in which the delivery means (28) to diffuse oxygen are pipes (28) containing microholes (Fig.1).

4. Oxygenation device (10) as in Claim 1 or 2, in which the delivery means (28) to diffuse oxygen are mushroom heads (30) containing microholes (Fig.4b).

5. Oxygenation device (10) as in Claim 1 or 2, in which the delivery means (28) to diffuse oxygen are diffuser elements (29) containing microholes (Fig.4a).

6. Oxygenation device (10) as in any claim hereinbefore, in which the delivery means (28) to diffuse oxygen cooperate at least with an oxygen flow regulator (39).

7. Oxygenation device (10) as in any claim hereinbefore, in which the delivery means (28) to diffuse oxygen cooperate at least with an oxygen pressure regulator (49).

8. Oxygenation device (10) as in any claim hereinbefore, in which the movable adjustable baffle (26) is mechanised with actuator motor means (27).

9. Oxygenation device (10) as in any claim hereinbefore, in which the weir (18) is mechanised with actuator motor means (27).

10. Oxygenation device (10) as in any claim hereinbefore, which consists of modules (13) that cooperate laterally.

11. System to manage and control a fish breeding plant, characterised in that it includes a managing, control and programming unit (32) that governs at least the means (49-50) that control the delivery of oxygen.

12. Managing and control system as in Claim 11, in which the managing, control and programming unit (32) governs actuator means (27) associated with the movable adjustable baffle (26).

13. Managing and control system as in Claim 11, in which the managing, control and programming unit (32) governs actuator means (20) associated with the movable weir (18).

14. Managing and control system as in any of Claims 11 to 13 inclusive, in which the managing, control and programming unit (32) is associated at least with an oxygen measurement means (34b) fitted downstream of the oxygenation device (10) according to the invention.

15. Managing and control system as in any of Claims 11 to 14 inclusive, in which the managing, control and programming unit (32) governs water topping-up means (42) and is associated with means (41) to measure the water level.

16. Managing and control system as in any of Claims 11 to 15 inclusive, in which the managing, control and programming unit (32) governs and controls food dispensing means (46).
